# FASCICULE DE BREVET EUROPEEN

(11) **EP 3 864 397 B1**
(45) Date de publication et mention de la délivrance du brevet: **03.06.2026**
(21) Numéro de dépôt: 19790679.5
(22) Date de dépôt: 20.09.2019
(51) Int. Cl.: G01N 21/47, G01B 11/30, G02B 5/10, G01N 21/88, G01N 21/95

(54) **DISPOSITIF D'INSPECTION OPTIQUE EN CHAMP SOMBRE**
OPTISCHE DUNKELFELDINSPEKTIONSVORRICHTUNG
DARK-FIELD OPTICAL INSPECTING DEVICE

(30) Priorité: 08.10.2018 FR 1859311
(43) Date de publication de la demande: 18.08.2021
(73) Titulaire: Unity Semiconductor, 38330 Montbonnot-Saint-Martin (FR)
(72) Inventeur: DURAND DE GEVIGNEY, Mayeul, 38240 Meylan (FR)
(74) Mandataire: IP Trust
(86) Numéro de dépôt international: PCT/FR2019/052210
(87) Numéro de publication internationale: WO 2020/074800

(56) Documents cités:
- EP-A1- 2 685 237
- WO-A1-2009/112704
- DE-A1- 2 637 375
- JP-A- 2018 189 517
- US-A1- 2006 060 189
- US-A1- 2009 213 364
- US-A1- 2016 139 059

## Description

### DOMAINE DE L'INVENTION

La présente invention concerne un dispositif d'inspection optique en champ sombre d'un substrat, pour y détecter la présence éventuelle d'un défaut ou d'une particule, ou plus généralement en caractériser l'état de surface. Le substrat peut être une plaquette pour la fabrication de composants dans le domaine de l'électronique, l'optique ou l'optoélectronique.

### ARRIERE PLAN TECHNOLOGIQUE DE L'INVENTION

Les substrats, tels que des plaquettes (ou *« wafers »* selon la terminologie anglo-saxonne) pour l'électronique, l'optique ou l'optoélectronique, doivent être inspectés afin de pouvoir détecter, identifier et/ou caractériser d'éventuels défauts et/ou particules présents sur leurs surfaces ou dans leurs volumes. Les défauts peuvent être des défauts de cristaux, des rayures, des aspérités ou des rugosités de surface.

Cette inspection vise généralement à fournir des informations qualitatives ou quantitatives, telles que, par exemple, la localisation, la taille et/ou la nature du défaut ou de la particule. Ces informations sur l'état de surface du substrat peuvent être représentatives de la qualité du procédé de fabrication du substrat ou d'une étape de production dans laquelle le substrat est utilisé.

Il est connu que la lumière diffusée par la surface d'un substrat lors d'une illumination en champ sombre se répartit spatialement selon des angles azimutaux et/ou d'élévations privilégiés, qui constituent une signature porteuse d'informations de la présence et/ou de la nature d'un défaut ou d'une particule.

On connaît ainsi du document US6538730 un dispositif d'inspection comprenant l'illumination en champ sombre d'un substrat à l'aide d'un faisceau lumineux incident se projetant en un point d'inspection du substrat. Un miroir collectant le rayonnement lumineux diffus présente une symétrie de révolution par rapport à un axe passant par le point d'inspection et perpendiculaire au substrat. Une partie du rayonnement lumineux diffus réfléchi par le substrat est collectée pour être dirigée vers un point focal. Des dispositifs collecteurs, tels que les fibres d'un faisceau de fibres optiques ou les pixels d'une matrice, sont disposés autour de l'axe de symétrie pour collecter le rayonnement diffus selon une distribution d'angles azimutaux déterminée. Puisque la discrimination d'angle est réalisée au niveau d'une pluralité de fibres ou de pixels, ceux-ci doivent être placés à une certaine distance du point focal, pour collecter le rayonnement au niveau d'une tache de lumière plutôt qu'au niveau d'un point. La tache de lumière est résolue spatialement par le faisceau de fibres ou la matrice de pixels.

Ainsi, cette approche discrimine le rayonnement diffus selon l'angle azimutal sur une zone spatiale étendue, ce qui conduit nécessairement à une perte photométrique correspondant à la partie du rayonnement qui n'est pas collectée par les fibres ou les pixels.

L'information de distribution d'angles azimutaux est donc obtenue au prix d'une perte de signal, ce qui peut conduire à imposer un temps d'acquisition relativement long et donc à une cadence d'inspection relativement faible.

En outre, le fait de résoudre spatialement cette tâche de lumière amène un risque accru de diaphotie aux transitions entre les zones à distinguer.

Les documents US2009/213364A1, et US2016/139059 divulguent également chacun un dispositif d'inpection.

Le document US2006/0060189 divulgue un réflecteur optique.

L'invention propose une solution à ce problème. Elle vise notamment à établir, dans un dispositif d'inspection optique en champ sombre, des informations d'angles azimutaux du rayonnement diffus, à une cadence de mesure améliorée vis-à-vis des solutions de l'état de la technique.

### BREVE DESCRIPTION DE L'INVENTION

En vue de la réalisation de l'un de ces buts, l'objet de l'invention , tel que défini à la revendication 1, propose un dispositif d'inspection optique en champ sombre d'un substrat, tel qu'une plaquette pour l'électronique, l'optique ou l'électronique, comprenant :
- une source lumineuse pour générer au moins un faisceau d'illumination incident se projetant en une zone d'inspection du substrat, et étant susceptible de s'y réfléchir sous la forme d'un rayonnement diffus ;
- au moins un premier et un deuxième dispositif collecteur présentant une surface de captation pour capter une partie au moins du rayonnement diffus et le transmettre à un dispositif d'analyse ;
- un dispositif optique réfléchissant présentant une surface réfléchissante agencée pour diriger une partie au moins du rayonnement diffus issu d'un foyer optique de collection coïncidant avec la zone d'inspection en direction des dispositifs collecteurs.

Le dispositif d'inspection optique est remarquable en ce que :
- la surface réfléchissante du dispositif optique réfléchissant comprend une première zone réfléchissante sur laquelle se réfléchit une première partie du rayonnement diffus vers un premier foyer optique de détection optiquement conjugué du foyer optique de collection, et une deuxième zone réfléchissante sur laquelle se réfléchit une deuxième partie du rayonnement diffus vers un deuxième foyer optique de détection, optiquement conjugué du foyer optique de collection et distinct du premier foyer optique de détection ;
- le premier et le deuxième dispositif collecteur sont respectivement disposés dans le dispositif d'inspection pour capter le rayonnement diffus au premier et au deuxième foyer optique de détection du dispositif optique réfléchissant.

De cette manière, on peut collecter très efficacement différentes parties du rayonnement diffus discriminées spatialement au niveau du dispositif optique réfléchissant. Chaque partie de ce rayonnement est alors entièrement ou presque entièrement collectée par l'un des dispositifs collecteurs.

Selon d'autres caractéristiques avantageuses et non limitatives de l'invention, prises seules ou selon toute combinaison techniquement réalisable :
- la source lumineuse est agencée pour générer au moins un faisceau d'illumination incident sur le substrat selon un angle d'incidence oblique relativement au plan dudit substrat ;
- la source lumineuse est agencée pour générer au moins deux faisceaux d'illumination incidents sur le substrat dans un plan d'incidence selon un angle d'incidence oblique relativement au plan dudit substrat, lesdits faisceaux d'illumination formant entre eux un angle non nul dans le plan d'incidence et étant cohérents entre eux de sorte à générer des interférences dans la zone d'inspection ;
- la première zone réfléchissante est délimitée angulairement en azimut pour que la première partie du rayonnement diffus qu'elle intercepte corresponde à une diffusion arrière ;
- la deuxième zone réfléchissante est délimitée angulairement en azimut pour que la deuxième partie du rayonnement diffus qu'elle intercepte corresponde à une diffusion avant ;
- les premières et deuxièmes zones réfléchissantes sont complémentaires de sorte qu'une partie au moins du rayonnement diffus est collectée par le dispositif optique réfléchissant pour tous les angles possibles d'azimut ;
- la première et la deuxième zone réfléchissantes correspondent à des portions d'ellipses distinctes dont les axes principaux respectifs forment entre eux un angle non nul, un premier foyer desdites ellipses correspondant au foyer optique de collection, l'autre foyer desdites ellipses correspondant respectivement au premier et au deuxième foyer optique de détection du dispositif optique réfléchissant ;
- l'un au moins du premier et du deuxième dispositif collecteur comprend une fibre optique présentant une extrémité formant la surface de captation du dispositif collecteur, l'extrémité de la fibre optique étant disposée dans le dispositif d'inspection pour coïncider, ou être optiquement conjuguée, avec le premier et/ou le deuxième foyer optique de détection ;
- l'un au moins du premier et du deuxième dispositif collecteur comprend un élément optique de focalisation, tel qu'une lentille ou une microlentille ;
- l'axe optique de la fibre optique est aligné avec la bissectrice de l'angle solide d'incidence du rayonnement lumineux au foyer optique de détection ;
- le premier foyer optique de détection et le deuxième foyer optique de détection sont respectivement à une première et à une deuxième distance d'un axe perpendiculaire au substrat passant par la zone d'inspection, la première distance étant différente de la seconde ;
- la première zone réfléchissante et la deuxième zone réfléchissante sont agencées pour réfléchir respectivement des parties du rayonnement diffus correspondant à des secteurs d'angles en élévation différents ;
- le dispositif d'inspection comprend un troisième dispositif collecteur pour capter une partie au moins du rayonnement diffus selon un angle solide autour d'une normale à la surface du substrat passant par la zone d'inspection.

L'invention concerne également un dispositif optique réfléchissant selon la revendication 13, pour réfléchir un rayonnement lumineux diffus d'un dispositif d'inspection optique en champ sombre, le dispositif optique réfléchissant comprenant une surface réfléchissante configurée selon une première zone réfléchissante pour orienter une première partie du rayonnement diffus issu d'un foyer optique de collection vers un premier foyer optique de détection optiquement conjugué du foyer optique de collection, et selon une deuxième zone réfléchissante pour orienter une deuxième partie du rayonnement diffus issu du foyer optique de collection vers un deuxième foyer optique de détection, optiquement conjugué du foyer optique de collection et distinct du premier foyer optique de détection

Avantageusement, la première zone réfléchissante et la deuxième zone réfléchissante sont réalisées avec des éléments mécaniques distincts.

### BREVE DESCRIPTION DES DESSINS

D'autres caractéristiques et avantages de l'invention ressortiront de la description détaillée de l'invention qui va suivre en référence aux figures annexées sur lesquels :
- la figure 1 représente schématiquement un dispositif d'inspection optique en champ sombre conforme à la description détaillée ;
- les figures 2a et 2b définissent les angles d'azimuth et d'élévation ;
- les figures 3a et 3b représentent un exemple particulier d'un dispositif optique réfléchissant ;
- Les figures 4a et 4b représentent des configurations particulières d'un dispositif optique réfléchissant.
- Les figures 5a et 5b représentent respectivement un mode de réalisation d'une source lumineuse à deux faisceaux, et un signal de diffusion obtenu avec cette source.

### DESCRIPTION DETAILLEE DE L'INVENTION

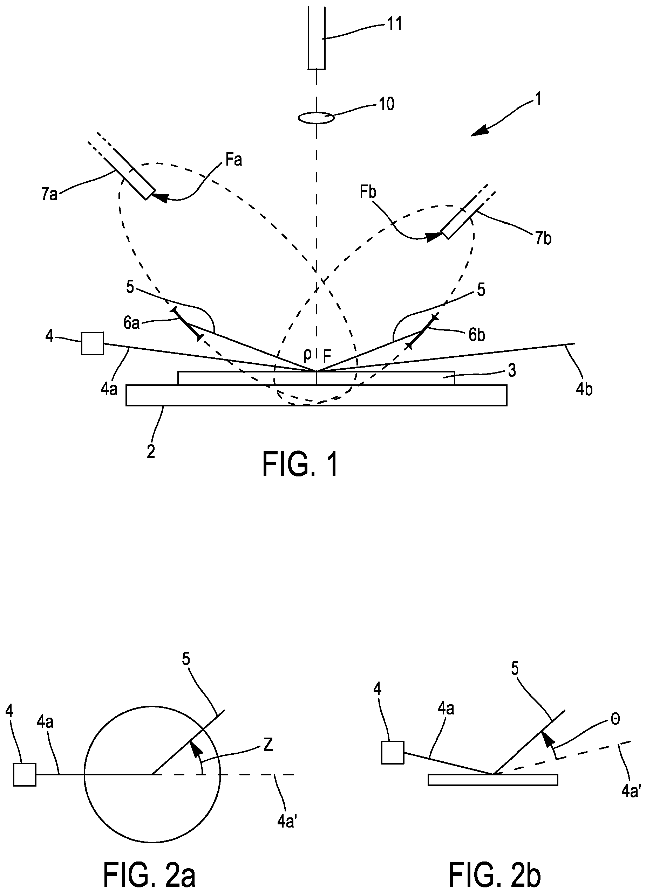

La figure 1 représente schématiquement un dispositif d'inspection optique 1 en champ sombre conforme à la présente description. Une chambre défini un espace interne isolé de la luminosité extérieure. L'espace interne comprend un support 2 d'un substrat 3.

Le substrat 3 peut être ou comprendre par exemple une plaquette (ou wafer en anglais) d'un matériau semi-conducteur, tel que du silicium ou du germanium, ou isolant, tel que du verre, ou encore composé de plusieurs couches, nu ou traité avec par exemple des circuit électroniques ou optiques réalisés dessus. Le substrat 3 peut également comprendre tout type de substrats connus par exemple dans l'industrie du semiconducteur, des MEMS ou de l'optique intégrée, tel que par exemple des « wafer sur frame », des « dicing frame » ou des panneaux (« panels »).

Le support 2 peut être mis en mouvement ou déplacé, par exemple en rotation et/ou en translation selon une direction comprise dans le plan défini par le support de manière à pouvoir inspecter toute la surface exposée du substrat 3 avec un ou des faisceaux d'illumination 4a comme cela sera expliqué plus loin. A cet effet, le dispositif d'inspection optique est muni d'un mécanisme de déplacement contrôlé du support 2 relativement au faisceau d'illumination 4a, non représenté sur la figure 1. Le mécanisme de déplacement peut par exemple comprendre un dispositif de mise en rotation du support 2 selon un axe perpendiculaire à son plan, et un dispositif de translation du support 2 et/ou du faisceau d'illumination 4a dans le plan du support 2. On peut ainsi inspecter toute la surface du substrat 3 avec le ou les faisceaux d'illumination 4a selon une trajectoire en spirale.

Le mécanisme de déplacement peut également permettre de déplacer le support 2 relativement au dispositif optique en translation selon une direction perpendiculaire au plan défini par le support 2, de manière à permettre un positionnement optimal du ou des faisceaux d'illumination 4a sur le substrat 3, notamment pour l'inspection de substrats d'épaisseurs variées ou variables.

Le dispositif 1 comprend également une source lumineuse 4, par exemple une source laser. La source est agencée dans le dispositif pour projeter un faisceau d'illumination incident 4a en une zone ou un point d'inspection P de la surface du substrat 3. La source 4 peut comprendre, ou être associée à des composants optiques, lentilles ou miroirs par exemple, pour diriger le faisceau d'illumination incident 4a sur le point d'inspection P. Ces composants optiques ont été omis de la figure 1, pour en simplifier la présentation.

Le faisceau d'illumination 4a présente ici une incidence oblique vis-à-vis du plan défini par le support 2. Cette incidence oblique peut présenter par exemple un angle compris entre 40 et 60 degrés, vis à vis du plan défini par le support 2. Lorsqu'un substrat est disposé sur le support 2, le faisceau incident 4a se réfléchit au point d'inspection P en une réflexion spéculaire 4b et, éventuellement et selon l'état de surface du substrat 3 au point d'inspection P, en un rayonnement diffus ou diffusé 5. Ce rayonnement diffus 5 est émis selon des directions angulaires, en azimut et en élévation, qui dépendent des propriétés de la surface du substrat 3. Cette répartition angulaire, selon les angles d'azimut et/ou d'élévation, du rayonnement diffus 5 peut ainsi être interprétée pour déterminer l'état de surface du substrat au point d'inspection P.

Pour lever toute ambiguïté, et par référence aux figures 2a et 2b, on définit ici l'angle d'azimut Z d'une direction de diffusion comme l'angle projeté dans le plan définit par le support 2 entre une direction de référence qui peut être comme illustré la direction du faisceau incident 4a ou de sa réflexion spéculaire 4b et la direction de diffusion considérée. Par ailleurs, on définit l'angle d'élévation θ d'une direction de diffusion comme l'angle formé entre le plan définit par le support 2 et cette direction de diffusion. Par convention, l'angle d'azimut de la diffusion est nul lorsque la direction de diffusion correspond à la direction de propagation du faisceau incident 4a ou de sa réflexion spéculaire 4b au point d'inspection P, telle que projeté dans le plan du support 2. De même, l'angle d'élévation de la diffusion est nul lorsque la direction de diffusion est parallèle au plan du support 2.

Revenant à description de la figure 1, le dispositif d'inspection optique 1 comprend également un dispositif optique réfléchissant 6 pour diriger une partie au moins du rayonnement diffus 5 en direction de dispositifs collecteurs 7a, 7b. Ce dispositif optique réfléchissant 6 peut-être composé d'une pièce ou d'une pluralité de pièces optiques, tel que des miroirs, disposés au voisinage du point d'inspection P, par exemple autour du point de l'inspection P. Le dispositif optique réfléchissant 6 présente une surface réfléchissante tournée dans le point d'inspection P, de manière à pouvoir intercepter le rayonnement diffus 5 selon des secteurs angulaires déterminée en azimut et en élévation, et de manière à pouvoir le rediriger vers les dispositifs collecteurs 7a, 7b.

Plus précisément, le dispositif optique réfléchissant 6 présente un foyer optique de collection F, qui est positionné de sorte à coïncider avec le point d'inspection P. En d'autres termes, le dispositif optique réfléchissant 6 est disposé dans le dispositif d'inspection 1, pendant la mesure et relativement aux autres éléments de ce dispositif, pour rendre coïncidant le foyer optique de collection F avec la zone ou le point d'inspection P. On peut prévoir de déplacer le support 2 en translation selon une direction perpendiculaire au plan qu'il définit, de manière à précisément obtenir cette configuration de mesure.

La surface réfléchissante du dispositif optique réfléchissant 6 comprend au moins une première zone réfléchissante 6a sur laquelle se réfléchit une première partie du rayonnement diffus 5. Cette première partie du rayonnement diffus peut être celle interceptant un premier angle solide dont l'origine est placée sur le point d'inspection P et défini par une première gamme d'angles d'azimut et d'élévation. La première zone réfléchissante 6a de la surface réfléchissante est configurée pour réfléchir la première partie du rayonnement diffus issu du foyer optique de collection F vers un premier foyer optique de détection Fa, optiquement conjugué du foyer optique de collection F. De la sorte, la première partie du rayonnement diffus 5 issu du point d'inspection et interceptée par la première zone réfléchissante 6a est réfléchie pour converger vers le premier foyer de détection Fa.

On rappelle qu'un foyer optique est un point vers lequel convergent les rayons lumineux issus d'un point après leur passage dans un système optique. Dans l'invention, le foyer optique de collection F et le premier foyer optique de détection Fa sont en outre optiquement conjugués l'un de l'autre dans la mesure où les rayons lumineux issus de l'un et réfléchis par la première zone réfléchissante 6a convergent vers l'autre.

Similairement, la surface réfléchissante du dispositif optique réfléchissant 6 comprend une deuxième zone réfléchissante 6b sur laquelle se réfléchit une deuxième partie du rayonnement diffus 5. Cette deuxième partie du rayonnement diffus peut être celle interceptant un deuxième angle solide dont l'origine est placée sur le point d'inspection P et défini par une deuxième gamme d'angle d'azimut et d'élévation, distincte et qui ne recouvre pas la première gamme d'angle d'azimut et d'élévation. La deuxième zone réfléchissante 6b de la surface **réfléchissante** est configurée pour réfléchir la deuxième partie du rayonnement diffus 5 issu du foyer optique de collection F vers un deuxième foyer optique de détection Fb, optiquement conjugué au foyer optique de collection F. Ainsi, la deuxième partie du rayonnement diffus 5 issu du point d'inspection P et interceptée par la deuxième zone réfléchissante 6b est réfléchie pour converger vers le deuxième foyer optique de détection Fb.

Dans le dispositif d'inspection optique conforme à la présente description, le deuxième foyer optique de détection Fb est distincte du premier foyer optique de détection Fa.

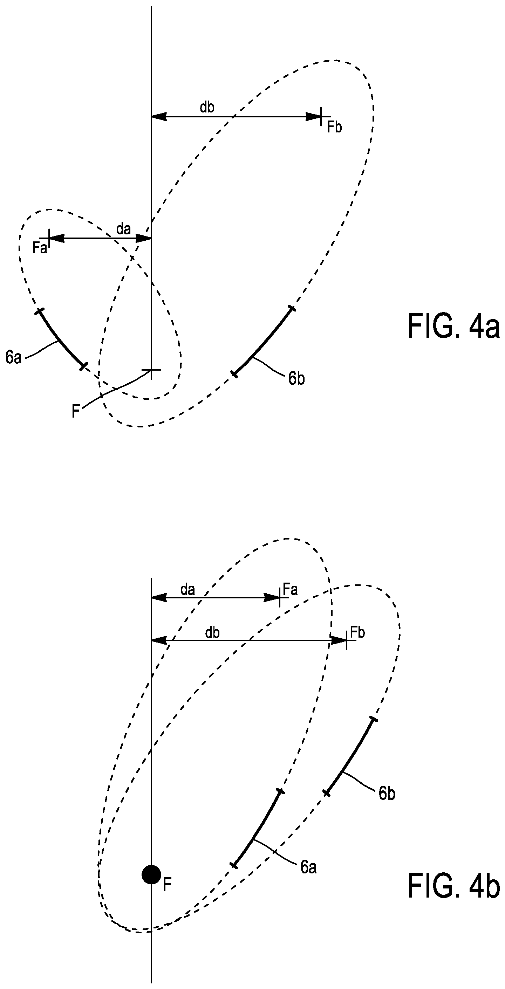

Il existe de nombreux moyens pour configurer le dispositif réfléchissant pour qu'il présente des foyers optiques de détections Fa, Fb distincts et conjugués au foyer optique de collection F. À titre d'exemple, et comme cela est représenté schématiquement sur la figure 4a et la figure 4b, la première et la deuxième zone réfléchissante 6a, 6b peuvent présenter un profil correspondant respectivement à des portions d'ellipses (dites « ellipses génératrices ») dont les axes principaux (joignant les foyers de l'ellipse) forment entre eux un angle non nul. Un foyer de l'ellipse génératrice de la première zone réfléchissante 6a et un foyer de l'ellipse génératrice de la seconde zone réfléchissante 6b sont mise en coïncidence pour former le foyer optique de collection F, et l'autre foyer de chaque ellipse correspond, respectivement, au premier et au deuxième foyer optique Fa, Fb de détection.

Dans un dispositif d'inspection optique 1 conforme à la présente description, il n'est pas nécessaire que le premier et le deuxième foyer optique de détection Fa, Fb soient disposés à une même distance d'un axe perpendiculaire au support 2, et passant par le point ou la zone d'inspection P. Comme cela est visible sur la figure 4a et la figure 4b, les premières et deuxièmes distances da, db séparant respectivement de cet axe le premier foyer optique Fa et le deuxième foyer optique Fb peuvent être différentes. Cette caractéristique fournie beaucoup de flexibilité pour disposer dans la chambre les différents éléments et composants optiques formant le dispositif d'inspection 1.

On peut bien entendu envisager d'autres configurations selon lesquels la surface réfléchissante du dispositif optique réfléchissant 6 présente d'autres zones réfléchissantes, interceptant d'autres parties du rayonnement diffus 5, ne se chevauchant ni entre elles, ni avec la première partie et la deuxième partie du rayonnement diffus 5, pour les faire converger vers d'autres foyers optiques de détection au niveau desquels d'autres dispositifs collecteurs sont positionnés. Chaque autre foyer optique de détection est optiquement conjugué au foyer optique de collection F qui coïncide avec le point d'inspection P.

Selon une première configuration particulière illustrée à la figure 4a, la première et la deuxième zone réfléchissante 6a, 6b sont configurées pour réfléchir respectivement des parties de rayonnement diffus 5 correspondant à des secteurs d'angle en azimut différents, c'est à dire qui ne se chevauchent pas. Les secteurs d'angle en élévation peuvent alors être identiques, se chevaucher ou être différents.

Selon une autre configuration particulière illustrée à la figure 4b, la première et la deuxième zone réfléchissante 6a, 6b sont configurées pour réfléchir respectivement des parties de rayonnement diffus 5 correspondant à des secteurs d'angle en élévation différents, c'est à dire qui ne se chevauchent pas. Les secteurs d'angle en azimut peuvent alors être identiques, se chevaucher ou être différents.

Selon une autre configuration particulière, les configurations illustrées à la figure 4a et à la figure 4b peuvent être combinées pour aboutir à un système avec quatre zones réfléchissantes renvoyant des parties de rayonnement diffus 5 vers quatre foyers optiques de détection distincts optiquement conjugués au foyer optique de collection F. Ces quatre zones réfléchissantes peuvent être par exemple agencées de sorte à intercepter le rayonnement diffus 5 selon deux secteurs angulaires distincts en élévation, ces deux secteurs angulaires distincts étant croisés avec une gamme d'angles en azimut comprise entre -90 degrés et 90 degrés, et avec une gamme d'angles en azimut comprise entre 90 degrés et 270 degrés.

Quel que soit le nombre de zones de la surface réfléchissant et leurs configurations particulières, le rayonnement diffus 5 est au moins en partie réfléchi pour converger au niveau d'un premier foyer optique de détection Fa et d'un deuxième foyer optique de détection Fb. Et le dispositif d'inspection optique 1 comprend au moins un premier et un deuxième dispositif collecteur 7a, 7b du rayonnement diffus réfléchi. Ces dispositifs collecteurs 7a, 7b présentent chacun une surface de captation, le rayonnement lumineux reçu au niveau de cette surface pouvant être capté pour être guidé et transmis, par exemple à un dispositif d'analyse du dispositif d'inspection optique 1 ou associé au dispositif d'inspection optique 1. Ce dispositif d'analyse peut permettre de mesurer par exemple l'intensité, le contenu spectral, la polarisation du rayonnement capté, et en dériver toutes les grandeurs d'analyse nécessaires.

Le premier et le deuxième dispositif collecteur 7a, 7b sont respectivement disposés dans le dispositif d'inspection optique 1 pour capter le rayonnement diffus au premier et au deuxième foyer optique de détection Fa, Fb.

Pour cela, les surfaces de captation peuvent être disposées dans le dispositif pour être précisément et respectivement placées au premier foyer optique Fa et au deuxième foyer optique Fb de détection, ou à proximité immédiate de ces foyers.

Les surfaces de captation peuvent également être positionnées de sorte à être optiquement conjuguées des foyers optiques de détection Fa, Fb par l'intermédiaire d'éléments optiques de focalisation, tels que des lentilles.

Chaque dispositif collecteur 7a, 7b peut comprendre une fibre optique, ou un faisceau de fibres optiques, dont la section d'extrémité forme la surface de captation. Dans ce cas, c'est donc l'extrémité de la fibre optique ou du faisceau qui est positionnée dans le dispositif d'inspection optique 1 pour coïncider autant que possible avec un foyer optique de détection Fa, Fb.

Pour améliorer le couplage, au moins l'un des dispositifs collecteurs 7a, 7b peut comprendre un élément optique de focalisation tel qu'une lentille, une lentille à gradient d'index GRIN ou une micro lentille, positionné de sorte à conjuguer optiquement l'extrémité de la ou les fibres optiques, et le foyer optique de détection.

En outre, pour favoriser la captation du rayonnement diffus réfléchi, il est avantageux de positionner la fibre optique ou le faisceau de fibres optiques de sorte que son axe soit aligné ou sensiblement aligné avec la bissectrice de l'angle solide d'incidence, au foyer optique de détection, du rayonnement diffus réfléchi.

Les fibres optiques présente l'avantage de permettre la réalisation de dispositifs collecteurs 7a, 7b de très petite dimension, car le détecteur (par exemple une photodiode ou une photodiode avalanche) peut être déporté à distance, à une autre extrémité des fibres optiques.

Bien entendu, les dispositifs collecteurs 7a, 7b peuvent être réalisés par tout autre moyen. Il est par exemple possible de positionner des photodétecteurs (tel que par exemple des photodiodes ou des photodiodes avalanches) aux foyers optiques de détection Fa, Fb, ou à des points optiquement conjugués des foyers optiques de détection Fa, Fb par des éléments optiques de focalisation.

Le dispositif d'inspection 1 qui vient d'être décrit est avantageux en ce qu'il permet de collecter, en vue de son analyse, différentes parties du rayonnement diffus discriminées spatialement au niveau du dispositif optique réfléchissant 6. Chaque partie de ce rayonnement est alors entièrement collectée, ou presque entièrement collectée, par l'un des dispositifs collecteurs 7a, 7b. On dispose ainsi d'un dispositif présentant une très grande efficacité photométrique. Le temps d'une mesure, c'est-à-dire le temps nécessaire à la collecte d'une quantité suffisante de photons, peut-être plus court et donc la cadence d'inspection plus rapide, que dans des dispositifs de l'art antérieur.

Il peut être également utile de mesurer une partie du rayonnement diffus 5 diffusé par le substrat 3, au niveau du point d'inspection P, dans des directions essentiellement normales à ce substrat 3, et plus précisément comprises dans un angle solide autour de la normale et engendré par un cône dont l'origine est le point d'inspection P. Pour permettre cette analyse, également porteuse d'informations sur l'état de surface du substrat au point d'inspection P, le dispositif de l'invention peut comprendre en outre un troisième dispositif collecteur **11** pour capter cette diffusion dite « normale ». Ce dispositif collecteur **11** peut être réalisé de la même manière que les dispositifs collecteurs 7a, 7b. Il peut comprendre notamment un photodétecteur ou une fibre optique, ou un faisceau de fibres optiques, disposé par exemple le long de la normale pour capter cette partie du rayonnement diffus 5.

Dans cette configuration, l'angle solide de captation est défini par la surface de captation du troisième dispositif collecteur **11** (de type par exemple fibre optique ou photodétecteur direct). Pour ajuster, et en particulier augmenter, cet angle solide de captation, le dispositif peut également comprendre un élément optique de focalisation 10, telle qu'une lentille, pour collecter ce rayonnement diffus sur un plus grand angle solide et le focaliser vers le troisième dispositif collecteur 11.

Pour analyser l'état de surface du substrat au niveau du point d'inspection P, il est souvent utile de disposer d'une mesure de la diffusion arrière, ou de la diffusion avant, ou simultanément de la diffusion avant et de la diffusion arrière, du faisceau d'illumination 4a.

La diffusion arrière correspond au rayonnement diffus 5 ayant un angle d'azimut compris entre 90 et 270 degrés, c'est-à-dire se propageant généralement dans le sens contraire au sens de propagation du faisceau incident 4a lorsque celui-ci est en incidence oblique.

La diffusion avant correspond au rayonnement diffus 5 ayant un angle d'azimut compris entre -90 et 90 degrés, c'est-à-dire se propageant généralement dans la direction du faisceau incident 4a lorsque celui-ci est en incidence oblique.

Pour établir la mesure de diffusion arrière, le dispositif d'inspection optique 1 peut être configuré pour que la première zone réfléchissante 6a de la surface réfléchissante soit délimitée en azimut pour que la première partie du rayonnement diffus 5 qu'elle intercepte corresponde à une diffusion arrière. En d'autres termes, la première zone 6a de la surface réfléchissante est disposée autour du point d'inspection P dans une gamme d'angles d'azimut compris entre 90 et 270 degrés, qui peut être répartie de manière symétrique ou non symétrique par rapport à la direction du faisceau incident 4a. Si l'étendue en azimut de cette première zone réfléchissante 6a couvre l'angle d'azimut du faisceau incident 4a (de 180 degrés, par convention), elle est bien entendu limitée en élévation ou dotée d'une ouverture pour laisser passer ce faisceau incident 4a.

De même, pour établir cette mesure de diffusion avant, le dispositif d'inspection optique 1 peut être configuré pour que la deuxième zone réfléchissante 6b de la surface réfléchissante soit délimitée en azimut pour que la deuxième partie du rayonnement diffus 5 qu'elle intercepte corresponde à une diffusion avant. Cette deuxième zone réfléchissante 6b peut-être disposées autour du point d'inspection P dans une gamme d'angles d'azimut compris entre -90 et 90 degrés, qui peut être répartie de manière symétrique ou non symétrique par rapport à la direction de la réflexion spéculaire 4b. Si l'étendue en azimut de cette deuxième zone réfléchissante 6b couvre l'angle d'azimut de la réflexion spéculaire 4b (de 0 degrés, par convention), elle est bien entendu limitée en élévation ou dotée d'une ouverture pour ne pas capter cette réflexion spéculaire 4b.

Cette configuration est par exemple celle illustrée à la figure 4a.

Bien entendu, d'autres types de répartitions angulaires en azimut des zones réfléchissantes peuvent être prévues, avec par exemple des zones réfléchissantes agencées pour capter une partie de diffusion avant et une partie de diffusion arrière, dans des gammes d'angles d'azimut compris entre 0 et +/-180 degrés.

De même, les différentes zones réfléchissantes peuvent avoir un positionnement angulaire en élévation identique ou différent, selon toutes les combinaisons possibles.

Par contre, de manière générale et de préférence, les surfaces réfléchissantes et les dispositifs collecteurs sont positionnés de sorte à ne pas capter la composante de réflexion spéculaire 4b du faisceau incident 4a.

Le choix du positionnement angulaire des zones réfléchissantes peut être effectué en fonction des caractéristiques de mesure recherchées, en se basant par exemple sur les théories de la diffusion bien connues telle que celle dite de « Mie ».

On pourra par exemple définir une zone réfléchissante 6a arrière ne collectant que la partie correspondant à la diffusion arrière du signal, selon des angles d'azimut compris entre 90 degrés et 270 degrés, et une zone réfléchissante 6b avant ne collectant que la partie correspondant à la diffusion avant du signal, selon des angles d'azimut compris entre -90 et 90 degrés. Les particules susceptibles d'être présentes à la surface du substrat inspecté, et présentant une taille supérieure à la longueur d'onde du faisceau d'illumination ont un lobe de diffusion principalement disposé selon la direction de propagation de ce faisceau. Il est plus facile de distinguer ces particules à partir de la diffusion avant. A l'inverse, les particules très petites devant la longueur d'onde du faisceau d'illumination ont un lobe de diffusion très isotrope, et il est plus avantageux de la détecter avec la diffusion arrière, qui comprend sensiblement autant de lumière diffusée que la diffusion avant, mais qui a tendance à être moins polluée que la diffusion avant par des signaux de rugosité, très anisotropiques.

Suivant un mode de réalisation particulier, il est possible de prévoir que les zones réfléchissantes composant la surface réfléchissante, dont une première et une seconde zone réfléchissante 6a et 6b, et éventuellement d'autres zones réfléchissantes, soient complémentaires entre elles, de sorte à capter ensemble une partie au moins du rayonnement diffus 5 pour tous les angles possibles d'azimut, ou la plupart d'entre eux, compris donc entre 0 et 360 degrés. Toutefois, il est à noter que même dans ce cas, du fait de l'existence des foyers optiques de détection distincts pour chaque zone réfléchissante, la surface globale résultant de la combinaison des zones réfléchissantes n'est pas une surface présentant une symétrie de révolution.

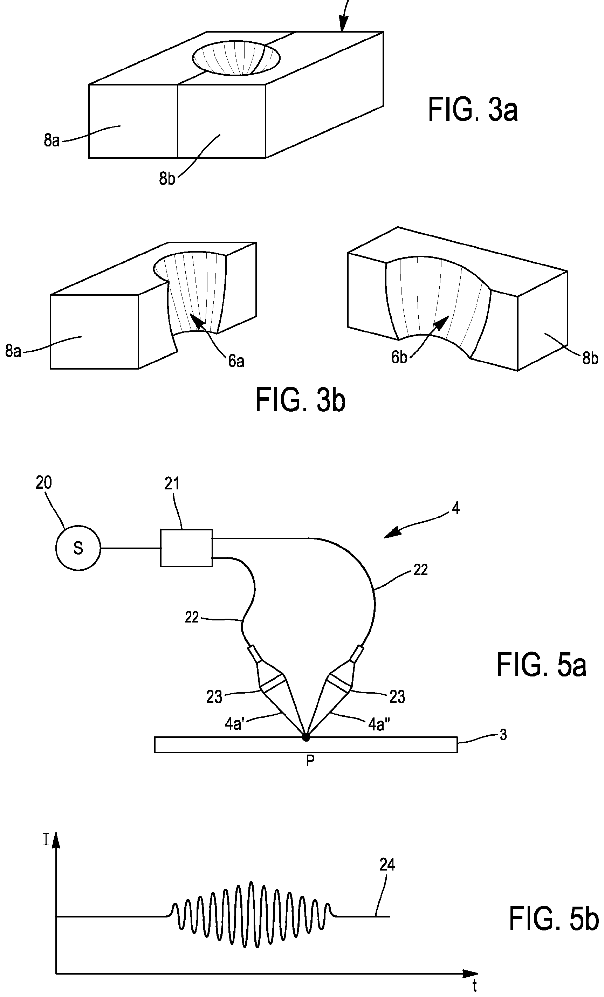

On a représenté sur les figures 3a, 3b, un exemple particulier de mise en œuvre du dispositif réfléchissant. Comme cela est particulièrement visible sur ces figures, le dispositif réfléchissant est ici formé de deux pièces optiques 8a, 8b, mécaniquement distinctes l'une de l'autre et assemblées l'une à l'autre au niveau de surfaces d'assemblage respectives. Les pièces optiques 8a, 8b sont ici formées de blocs de matériau, par exemple en métal. Sur le premier bloc 8a, on a réalisé un premier évidemment débouchant sur la face d'assemblage, par exemple par usinage. L'évidemment s'étend d'une première face du bloc à une face opposée de manière à définir la première zone réfléchissante 6a. On a similairement formé dans le deuxième bloc de matériau 8b un second évidement définissant la deuxième zone réfléchissante 6b.

Le dispositif optique réfléchissant 6 est obtenu en assemblant par leurs faces d'assemblage les deux pièces optiques 8a, 8b de sorte à former une ouverture centrale débouchant de part et d'autre du dispositif.

On pourra prévoir de concevoir le dispositif réfléchissant par assemblage de plus de deux pièces optiques, similairement à ce qui vient d'être présenté, pour former un dispositif d'inspection permettant de capter plus de deux parties de rayonnement diffus 5. On peut également envisager de ne pas assembler entre elles les deux pièces optiques 8a, 8b et de les disposer séparément dans la chambre pour rendre le dispositif d'inspection optique 1 fonctionnel.

Les principes qui viennent d'être exposés peuvent trouver une application dans différents types de dispositifs d'inspection optique.

En particulier, en référence aux figures 5a et 5b, la source lumineuse 4 peut être prévue pour générer deux faisceaux incidents cohérents 4a', 4a" et les diriger vers la surface du substrat 3 selon un plan d'incidence oblique relativement à ce substrat. Les deux faisceaux incidents 4a', 4a" peuvent former entre eux un angle prédéterminé de manière à former une zone d'interférence au niveau du point d'inspection P. Un tel dispositif est par exemple connu du document WO2009112704.

Dans cette configuration, la source lumineuse 4 peut par exemple comprendre une source laser 20, telle qu'une diode laser émettant dans le bleu ou l'ultraviolet. La lumière de la source est séparée en deux faisceaux 4a', 4a" par exemple par un coupleur à fibres 21, et dirigée par des fibres optiques 22 et des optiques de focalisation 23 telles que des lentilles vers la zone d'inspection P.

Lorsqu'une particule ou toute autre source de diffusion présent sur ou dans le substrat 3 traverse la zone de recouvrement des faisceaux incidents 4a', 4a" dans la zone d'inspection P, le rayonnement diffus 5 résultant tel que capté par les dispositifs collecteurs décrits précédemment prend la forme temporelle d'une « bouffé » d'interférence ou d'un interférogramme 24, dont la fréquence dépend de la vitesse de défilement.

Comme expliqué dans WO2009112704, On obtient ainsi un signal permettant une meilleure localisation spatiale des sources de diffusion puisqu'il est limité au volume de la zone d'interférences. Ce signal présente en outre une information plus riche sur les propriétés des sources de diffusion et permet une détection optimale en termes de sensibilité.

La source lumineuse 4 telle qu'illustrée à la figure 5a peut être intégrée à tous les modes de réalisation décrits précédemment. Il faut simplement prendre en compte le fait qu'il y a deux réflexions spéculaires, très proches angulairement. Les faisceaux 4a', 4a" sont compris dans un plan d'incidence qui présente un angle d'incidence oblique (en élévation) vis-à-vis du plan défini par le support 2. Cet angle d'incidence est défini de la même manière que l'angle d'incidence du faisceau d'illumination unique 4a du mode de réalisation de la figure 1.

Bien entendu l'invention n'est pas limitée au mode de mise en œuvre décrit et on peut y apporter des variantes de réalisation sans sortir du cadre de l'invention, tel que défini par les revendications.

## Revendications

1. Dispositif d'inspection optique en champ sombre (1) d'un substrat (3), tel qu'une plaquette pour l'électronique, l'optique ou l'électronique, comprenant :
- une source lumineuse (4) pour générer au moins un faisceau d'illumination incident (4a ; 4a', 4a") se projetant en une zone d'inspection (P) du substrat (2), et étant susceptible de s'y réfléchir sous la forme d'un rayonnement diffus (5);
- ladite source lumineuse (4) est agencée pour générer au moins un faisceau d'illumination incident (4a, 4a', 4a") sur le substrat (3) selon un angle d'incidence oblique relativement au plan dudit substrat (3) ;
- au moins un premier et un deuxième dispositif collecteur (7a, 7b) présentant une surface de captation pour capter une partie au moins du rayonnement diffus (5) et le transmettre à un dispositif d'analyse ;
- un dispositif optique réfléchissant (6) présentant une surface réfléchissante agencée pour diriger une partie au moins du rayonnement diffus (5) issu d'un foyer optique de collection (F) coïncidant avec la zone d'inspection (P) en direction des dispositifs collecteurs (7a, 7b) ;
- la surface réfléchissante du dispositif optique réfléchissant comprend une première zone réfléchissante (6a) sur laquelle se réfléchit une première partie du rayonnement diffus (5) vers un premier foyer optique de détection (Fa) optiquement conjugué du foyer optique de collection (F), et une deuxième zone réfléchissante (6b) sur laquelle se réfléchit une deuxième partie du rayonnement diffus (5) vers un deuxième foyer optique de détection (Fb), optiquement conjugué du foyer optique de collection (F) et distinct du premier foyer optique de détection (Fa);
- le premier et le deuxième dispositif collecteur (7a, 7b) sont respectivement disposés dans le dispositif d'inspection pour capter le rayonnement diffus (5) au premier et au deuxième foyer optique de détection (Fa, Fb) du dispositif optique réfléchissant (6) ;
le dispositif d'inspection étant **caractérisé en ce que** :
- la première et la deuxième zone réfléchissante (6a, 6b) présentent un profil correspondant à des portions d'ellipses distinctes dont les axes principaux respectifs forment entre eux un angle non nul, un premier foyer desdites ellipses correspondant au foyer optique de collection (F), l'autre foyer desdites ellipses correspondant respectivement au premier et au deuxième foyer optique de détection (Fa, Fb) du dispositif optique réfléchissant (6).

2. Dispositif d'inspection (1) selon l'une des revendications précédentes, dans lequel la source lumineuse (4) est agencée pour générer au moins deux faisceaux d'illumination incidents (4a, 4a") sur le substrat (3) dans un plan d'incidence selon un angle d'incidence oblique relativement au plan dudit substrat, lesdits faisceaux d'illumination (4a, 4a") formant entre eux un angle non nul dans le plan d'incidence et étant cohérents entre eux de sorte à générer des interférences dans la zone d'inspection (P).

3. Dispositif d'inspection (1) selon l'une des revendications 2 ou 3, dans lequel la première zone réfléchissante (6a) est délimitée angulairement en azimut pour que la première partie du rayonnement diffus (5) qu'elle intercepte corresponde à une diffusion arrière.

4. Dispositif d'inspection (1) selon l'une des revendications 2 à 4, dans lequel la deuxième zone réfléchissante (6b) est délimitée angulairement en azimut pour que la deuxième partie du rayonnement diffus (5) qu'elle intercepte corresponde à une diffusion avant.

5. Dispositif d'inspection (1) selon l'une des revendications précédentes, dans lequel les premières et deuxièmes zones réfléchissantes (6a, 6b) sont complémentaires de sorte qu'une partie au moins du rayonnement diffus (5) est collectée par le dispositif optique réfléchissant (6) pour tous les angles possibles d'azimut.

6. Dispositif d'inspection (1) selon l'une des revendications précédentes, dans lequel l'un au moins du premier et du deuxième dispositif collecteur (7a, 7b) comprend une fibre optique présentant une extrémité formant la surface de captation du dispositif collecteur, l'extrémité de la fibre optique étant disposée dans le dispositif d'inspection (1) pour coïncider, ou être optiquement conjuguée, avec le premier et/ou le deuxième foyer optique de détection (Fa, Fb).

7. Dispositif d'inspection (1) selon la revendication précédente, dans lequel l'axe optique de la fibre optique est aligné avec la bissectrice de l'angle solide d'incidence du rayonnement lumineux au foyer optique de détection (Fa, Fb).

8. Dispositif d'inspection (1) selon l'une des revendications précédentes, dans lequel l'un au moins du premier et du deuxième dispositif collecteur comprend (7a, 7b) un élément optique de focalisation, tel qu'une lentille ou une microlentille.

9. Dispositif d'inspection (1) selon l'une des revendications précédentes, dans lequel le premier foyer optique de détection (Fa) et le deuxième foyer optique de détection (Fb) sont respectivement à une première et à une deuxième distance (da, db) d'un axe perpendiculaire au substrat (3) passant par la zone d'inspection (P), la première distance (da) étant différente de la seconde (db).

10. Dispositif d'inspection (1) selon l'une des revendications précédentes, dans lequel la première zone réfléchissante (6a) et la deuxième zone réfléchissante (6b) sont agencées pour réfléchir respectivement des parties du rayonnement diffus (5) correspondant à des secteurs d'angles en élévation différents.

11. Dispositif d'inspection (1) selon l'une des revendications précédentes, comprenant un troisième dispositif collecteur (11) pour capter une partie au moins du rayonnement diffus (5) selon un angle solide autour d'une normale à la surface du substrat (3) passant par la zone d'inspection (P).

12. Dispositif d'inspection (1) selon l'une des revendications précédentes, dans lequel la surface globale résultant de la combinaison de la première zone réfléchissante et de la deuxième zone réfléchissante présente une asymétrie de révolution.

13. Dispositif optique réfléchissant (6), pour réfléchir un rayonnement lumineux diffus (5) d'un dispositif d'inspection optique en champ sombre (1), le dispositif optique réfléchissant (6) comprenant une surface réfléchissante configurée :
- selon une première zone réfléchissante (6a) pour orienter une première partie du rayonnement diffus issu d'un foyer optique de collection (F)vers un premier foyer optique de détection (Fa) optiquement conjugué du foyer optique de collection (F), et
- selon une deuxième zone réfléchissante (6b) pour orienter une deuxième partie du rayonnement diffus issu du foyer optique de collection (F) vers un deuxième foyer optique de détection (Fb), optiquement conjugué du foyer optique de collection (F) et distinct du premier foyer optique de détection (Fa) ;
la première et la deuxième zone réfléchissante (6a, 6b) présentant un profil correspondant à des portions d'ellipses distinctes dont les axes principaux respectifs forment entre eux un angle non nul, un premier foyer desdites ellipses correspondant au foyer optique de collection (F), l'autre foyer desdites ellipses correspondant respectivement au premier et au deuxième foyer optique de détection (Fa, Fb) du dispositif optique réfléchissant (6), et la surface globale résultant de la combinaison de la première zone réfléchissante et de la deuxième zone réfléchissante présente une asymétrie de révolution.

14. Dispositif optique réfléchissant (6) selon la revendication précédente, dans lequel la première zone réfléchissante (6a) et la deuxième zone réfléchissante (6b) sont réalisées avec des éléments mécaniques distincts.

## Patentansprüche

1. Vorrichtung zur optischen Dunkelfeldinspektion (1) eines Substrats (3), wie einer Platte für die Elektronik, die Optik oder die Elektronik, umfassend:
- eine Lichtquelle (4) zum Generieren von mindestens einem einfallenden Beleuchtungsstrahl (4a; 4a', 4a"), der in einen Inspektionsbereich (P) des Substrats (2) projiziert wird und dort imstande ist, in Form einer diffusen Strahlung (5) reflektiert zu werden;
- wobei die Lichtquelle (4) zum Generieren von mindestens einem einfallenden Beleuchtungsstrahl (4a, 4a', 4a") auf das Substrat (3) unter einem schrägen Einfallswinkel relativ zu der Ebene des Substrats (3) angeordnet ist;
- mindestens eine erste und eine zweite Sammlervorrichtung (7a, 7b), die eine Auffangoberfläche zum Auffangen mindestens eines Teils der diffusen Strahlung (5) und zum Übertragen dieses an eine Analysevorrichtung aufweisen;
- eine reflektierende optische Vorrichtung (6), die eine reflektierende Oberfläche aufweist, die zum Lenken mindestens eines Teils der diffusen Strahlung (5), der aus einem optischen Sammelfokus (F) hervorgeht, der mit dem Inspektionsbereich (P) zusammenfällt, in Richtung der Sammlervorrichtungen (7a, 7b) angeordnet ist;
- wobei die reflektierende Oberfläche der reflektierenden optischen Vorrichtung einen ersten reflektierenden Bereich (6a), auf dem ein erster Teil der diffusen Strahlung (5) zu einem ersten optischen Erfassungsfokus (Fa), optisch konjugiert von dem optischen Sammelfokus (F), reflektiert wird, und einen zweiten reflektierenden Bereich (6b), auf dem ein zweiter Teil der diffusen Strahlung (5) zu einem zweiten optischen Erfassungsfokus (Fb), optisch konjugiert von dem optischen Sammelfokus (F) und verschieden von dem ersten optischen Erfassungsfokus (Fa), reflektiert wird, umfasst;
- wobei die erste und die zweite Sammlervorrichtung (7a, 7b) jeweils in der Inspektionsvorrichtung zum Auffangen der diffusen Strahlung (5) an dem ersten und an dem zweiten optischen Erfassungsfokus (Fa, Fb) der reflektierenden optischen Vorrichtung (6) eingerichtet sind;
wobei die Inspektionsvorrichtung **dadurch gekennzeichnet ist, dass**:
- der erste und der zweite reflektierende Bereich (6a, 6b) ein Profil aufweisen, das Abschnitten verschiedener Ellipsen entspricht, deren jeweilige Hauptachsen zwischen sich einen Winkel von nicht null ausbilden, wobei ein erster Fokus der Ellipsen dem optischen Sammelfokus (F) entspricht, der andere Fokus der Ellipsen jeweils dem ersten und dem zweiten optischen Erfassungsfokus (Fa, Fb) der reflektierenden optischen Vorrichtung (6) entspricht.

2. Inspektionsvorrichtung (1) nach einem der vorstehenden Ansprüche, wobei die Lichtquelle (4) zum Generieren von mindestens zwei einfallenden Beleuchtungsstrahlen (4a, 4a") auf das Substrat (3) in einer Einfallsebene unter einem schrägen Einfallswinkel relativ zu der Ebene des Substrats angeordnet ist, wobei die Beleuchtungsstrahlen (4a, 4a") zwischen sich einen Winkel von nicht null in der Einfallsebene ausbilden und untereinander kohärent sind, sodass Interferenzen in dem Inspektionsbereich (P) generiert werden.

3. Inspektionsvorrichtung (1) nach einem der Ansprüche 2 oder 3, wobei der erste reflektierende Bereich (6a) im Azimut winkelmäßig begrenzt ist, damit der erste Teil der diffusen Strahlung (5), den er abfängt, einer Rückdiffusion entspricht.

4. Inspektionsvorrichtung (1) nach einem der Ansprüche 2 bis 4, wobei der zweite reflektierende Bereich (6b) im Azimut winkelmäßig begrenzt ist, damit der zweite Teil der diffusen Strahlung (5), den er abfängt, einer Vorwärtsdiffusion entspricht.

5. Inspektionsvorrichtung (1) nach einem der vorstehenden Ansprüche, wobei der erste und der zweite reflektierende Bereich (6a, 6b) komplementär sind, sodass mindestens ein Teil der diffusen Strahlung (5) durch die reflektierende optische Vorrichtung (6) für alle möglichen Azimutwinkel gesammelt wird.

6. Inspektionsvorrichtung (1) nach einem der vorstehenden Ansprüche, wobei mindestens eine der ersten und der zweiten Sammlervorrichtung (7a, 7b) eine optische Faser umfasst, die ein Ende aufweist, das die Auffangoberfläche der Sammlervorrichtung ausbildet, wobei das Ende der optischen Faser in der Inspektionsvorrichtung (1) zum Zusammenfallen oder um optisch konjugiert mit dem ersten und/oder dem zweiten optischen Erfassungsfokus (Fa, Fb) zu sein, eingerichtet ist.

7. Inspektionsvorrichtung (1) nach dem vorstehenden Anspruch, wobei die optische Achse der optischen Faser mit der Winkelhalbierenden des Raumwinkels des Lichtstrahleinfalls an dem optischen Erfassungsfokus (Fa, Fb) ausgerichtet ist.

8. Inspektionsvorrichtung (1) nach einem der vorstehenden Ansprüche, wobei mindestens eine der ersten und der zweiten Sammlervorrichtung ein optisches Fokussierungselement, wie eine Linse oder eine Mikrolinse, umfasst (7a, 7b).

9. Inspektionsvorrichtung (1) nach einem der vorstehenden Ansprüche, wobei der erste optische Erfassungsfokus (Fa) und der zweite optische Erfassungsfokus (Fb) jeweils in einem ersten und einem zweiten Abstand (da, db) von einer Achse senkrecht zu dem Substrat (3) sind, die durch den Inspektionsbereich (P) verläuft, wobei sich der erste Abstand (da) von dem zweiten (db) unterscheidet.

10. Inspektionsvorrichtung (1) nach einem der vorstehenden Ansprüche, wobei der erste reflektierende Bereich (6a) und der zweite reflektierende Bereich (6b) zum Reflektieren jeweiliger Teile der diffusen Strahlung (5) angeordnet sind, die Sektoren unterschiedlicher Elevationswinkel entsprechen.

11. Inspektionsvorrichtung (1) nach einem der vorstehenden Ansprüche, umfassend eine dritte Sammlervorrichtung (11) zum Auffangen von mindestens einem Teil der diffusen Strahlung (5) unter einem Raumwinkel um eine Normale herum zu der Oberfläche des Substrats (3), die durch den Inspektionsbereich (P) verläuft.

12. Inspektionsvorrichtung (1) nach einem der vorstehenden Ansprüche, wobei die Gesamtoberfläche, die sich aus der Kombination des ersten reflektierenden Bereichs und des zweiten reflektierenden Bereichs ergibt, eine Rotationsasymmetrie aufweist.

13. Reflektierende optische Vorrichtung (6) zum Reflektieren einer diffusen Lichtstrahlung (5) einer Vorrichtung zur optischen Dunkelfeldinspektion (1), die reflektierende optische Vorrichtung (6) umfassend eine reflektierende Oberfläche, die konfiguriert ist:
- gemäß eines ersten reflektierenden Bereichs (6a) zum Ausrichten eines ersten Teils der diffusen Strahlung, der aus einem optischen Sammelfokus (F) hervorgeht, zu einem ersten optischen Sammelfokus (Fa), der optisch konjugiert zu dem optischen Sammelfokus (F) ist, und
- gemäß eines zweiten reflektierenden Bereichs (6b) zum Ausrichten eines zweiten Teils der diffusen Strahlung, der aus dem optischen Sammelfokus (F) hervorgeht, zu einem zweiten optischen Erfassungsfokus (Fb), optisch konjugiert von dem optischen Sammelfokus (F) und verschieden von dem ersten optischen Erfassungsfokus (Fa);
wobei der erste und der zweite reflektierende Bereich (6a, 6b) ein Profil aufweisen, das Abschnitten von unterschiedlichen Ellipsen entspricht, deren jeweilige Hauptachsen zwischen sich einen Winkel von nicht null ausbilden, wobei ein erster Fokus der Ellipsen dem optischen Sammelfokus (F) entspricht, der andere Fokus der Ellipsen jeweils dem ersten und dem zweiten optischen Erfassungsfokus (Fa, Fb) der reflektierenden optischen Vorrichtung (6) entspricht, und die Gesamtoberfläche, die aus der Kombination des ersten reflektierenden Bereichs und des zweiten reflektierenden Bereichs resultiert, eine Rotationsasymmetrie aufweist.

14. Reflektierende optische Vorrichtung (6) nach dem vorstehenden Anspruch, wobei der erste reflektierende Bereich (6a) und der zweite reflektierende Bereich (6b) mit verschiedenen mechanischen Elementen realisiert sind.

## Claims

1. Device (1) for the dark-field optical inspection of a substrate (3) such as a wafer for electronics, optics, or electronics, the device comprising:
- a light source (4) for generating at least one incident illuminating beam (4a; 4a', 4a") that is projected onto an inspection zone (P) of the substrate (2) and that is capable of being reflected there in the form of diffuse radiation (5);
- said light source (4) is designed to generate at least one illuminating beam (4a, 4a', 4a") that is incident on the substrate (3) at an oblique incidence angle relative to the plane of said substrate (3);
- at least a first and a second collector device (7a, 7b) having a capture surface for capturing at least a portion of the diffuse radiation (5) and transmitting it to an analysis device;
- a reflecting optical device (6) having a reflecting surface that is designed to direct at least a portion of the diffuse radiation (5) originating from a collection optical focal point (F) that is coincident with the inspection zone (P) in the direction of the collector devices (7a, 7b);
- the reflecting surface of the reflecting optical device comprises a first reflecting zone (6a) on which a first portion of the diffuse radiation (5) is reflected toward a first detection optical focal point (Fa) that is optically conjugate with the collection optical focal point (F), and a second reflecting zone (6b) on which a second portion of the diffuse radiation (5) is reflected toward a second detection optical focal point (Fb) that is optically conjugate with the collection optical focal point (F) and that is distinct from the first detection optical focal point (Fa);
- the first and the second collector device (7a, 7b) are respectively arranged in the inspection device in order to capture the diffuse radiation (5) at the first and at the second detection optical focal point (Fa, Fb) of the reflecting optical device (6);
the inspection device being **characterized in that:**
- the first and the second reflecting zone (6a, 6b) have a profile corresponding to portions of distinct ellipses of which the respective main axes form a non-zero angle between them, a first focal point of said ellipses corresponding to the collection optical focal point (F) and the other focal point of said ellipses corresponding respectively to the first and to the second detection optical focal point (Fa, Fb) of the reflecting optical device (6).

2. Inspection device (1) according to any of the preceding claims, wherein the light source (4) is designed to generate at least two illuminating beams (4a, 4a") that are incident on the substrate (3) in an incidence plane at an oblique incidence angle relative to the plane of said substrate, said illuminating beams (4a, 4a") forming a non-zero angle between them in the incidence plane and being mutually coherent such as to generate interference in the inspection zone (P).

3. Inspection device (1) according to either of claims 2 or 3, wherein the azimuth of the first reflecting zone (6a) is angularly delimited in order that the first portion of the diffuse radiation (5) that it intercepts corresponds to backscatter.

4. Inspection device (1) according to any of claims 2 to 4, wherein the azimuth of the second reflecting zone (6b) is angularly delimited in order that the second portion of the diffuse radiation (5) that it intercepts corresponds to forward scatter.

5. Inspection device (1) according to any of the preceding claims, wherein the first and second reflecting zones (6a, 6b) are complementary such that at least a portion of the diffuse radiation (5) is collected by the reflecting optical device (6) for all possible azimuth angles.

6. Inspection device (1) according to any of the preceding claims, wherein at least one of the first and the second collector device (7a, 7b) comprises an optical fiber having one end that forms the capture surface of the collector device, the end of the optical fiber being arranged in the inspection device (1) in order to coincide, or to be optically conjugate, with the first and/or the second detection optical focal point (Fa, Fb).

7. Inspection device (1) according to the preceding claim, wherein the optical axis of the optical fiber is aligned with the bisector of the solid incidence angle of the light radiation at the detection optical focal point (Fa, Fb).

8. Inspection device (1) according to any of the preceding claims, wherein at least one of the first and the second collector device comprises (7a, 7b) a focusing optical element such as a lens or a microlens.

9. Inspection device (1) according to any of the preceding claims, wherein the first detection optical focal point (Fa) and the second detection optical focal point (Fb) are respectively at a first and at a second distance (da, db) from an axis that is perpendicular to the substrate (3) and that passes through the inspection zone (P), the first distance (da) being different from the second (db).

10. Inspection device (1) according to any of the preceding claims, wherein the first reflecting zone (6a) and the second reflecting zone (6b) are designed to each reflect portions of the diffuse radiation (5) corresponding to different elevation angle sectors.

11. Inspection device (1) according to any of the preceding claims, comprising a third collector device (11) for capturing at least a portion of the diffuse radiation (5) at a solid angle about a normal to the surface of the substrate (3) passing through the inspection zone (P).

12. Inspection device (1) according to any of the preceding claims, wherein the overall surface resulting from the combination of the first reflecting zone and the second reflecting zone has an asymmetry of revolution.

13. Reflecting optical device (6) for reflecting diffuse light radiation (5) from a dark-field optical inspection device (1), the reflecting optical device (6) comprising a reflecting surface configured:
- according to a first reflecting zone (6a), to orient a first portion of the diffuse radiation originating from a collection optical focal point (F) toward a first detection optical focal point (Fa) that is optically conjugate with the collection optical focal point (F), and
- according to a second reflecting zone (6b), to orient a second portion of the diffuse radiation originating from the collection optical focal point (F) toward a second detection optical focal point (Fb) that is optically conjugate with the collection optical focal point (F) and that is distinct from the first detection optical focal point (Fa);
the first and the second reflecting zone (6a, 6b) have a profile corresponding to portions of distinct ellipses of which the respective main axes form a non-zero angle between them, a first focal point of said ellipses corresponding to the collection optical focal point (F) and the other focal point of said ellipses corresponding respectively to the first and to the second detection optical focal point (Fa, Fb) of the reflecting optical device (6), and the overall surface resulting from the combination of the first reflecting zone and the second reflecting zone has an asymmetry of revolution.

14. Reflecting optical device (6) according to the preceding claim, wherein the first reflecting zone (6a) and the second reflecting zone (6b) are produced with separate mechanical elements.
